# EUROPEAN PATENT SPECIFICATION

(11) **EP 0 642 922 B1**
(45) Date of publication and mention of the grant of the patent: **28.03.2001**
(21) Application number: 94904748.4
(22) Date of filing: 21.01.1994
(51) Int. Cl.: B32B 31/08, B29C 65/02, B32B 5/02, B32B 5/26

(54) **METHOD OF LAMINATING GAS PERMEABLE SHEET-SHAPED MATERIAL**
VERFAHREN ZUM KASCHIEREN VON GASDURCHLÄSSIGEM FOLIENMATERIAL
PROCEDE PERMETTANT DE LAMINER UN MATERIAU EN FEUILLE ET PERMEABLE AUX GAZ

(30) Priority: 25.01.1993 JP 979693
(43) Date of publication of application: 15.03.1995
(73) Proprietor: DAIKIN INDUSTRIES, LIMITED, Osaka-shi Osaka 530 (JP)
(72) Inventor: INOUE, Osamu, c/o Yodogawa Works of Daikin Ind.Ltd, Settsu-shi Osaka 566 (JP); KUSUMI, Toshio, c/o Yodogawa Works Daikin Ind. Ltd, Settsu-shi Osaka 566 (JP); ASANO, Jun, c/o Yodogawa Works of Dainkin Ind.Ltd, Settsu-shi Osaka 566 (JP); YAMAMOTO, Katsutoshi, c/o Yodogawa Works of, Settsu-shi Osaka 566 (JP); TANAKA, Osamu, c/o Yodogawa Works of, Settsu-shi Osaka 566 (JP); CHAEN, Shinichi, c/o Yodogawa Works of, Settsu-shi Osaka 566 (JP); URAOKA, Nobuki, c/o Yodogawa Works of, Settsu-shi Osaka 566 (JP)
(74) Representative: Hansen, Bernd, Dr. Dipl.-Chem.
(86) International application number: JP9400079
(87) International publication number: WO9416891

(56) References cited:
- EP-A- 0 410 733
- EP-A- 0 480 724
- DE-A- 2 641 937
- DE-C- 901 167
- FR-A- 1 234 730
- FR-A- 2 429 092
- JP-A- 3 234 618
- JP-A- 5 000 489
- US-A- 4 609 423

## Description

### Technical Field

The present invention relates to a method of laminating a gas permeable (breathable) sheet material such as a non-woven fabric, a woven fabric, a knit, a web, a fibrous mat, or a film material. The present invention particularly relates to a method of heat laminating such gas permeable sheet materials together into an integrated laminate form with keeping their gas permeability.

The present invention also relates to a method of laminating of a sheet material having gas permeability which is used in various industrial fields. The sheet material is used as, for example, a garment material and a sanitary material, a packaging material, various filter materials, a building material or a substrate for an electret material.

### Background of the Invention

In a method of laminating a plurality of gas permeable sheet materials into an integral form which has been employed for many years, the sheet materials comprising a thermoplastic material are heated to its melting point or higher using a heating roll, and a pressure is vertically applied to the sheet materials using, for example, a nip roll at the same time of or immediately after heating the sheet materials along the thickness direction of the materials so that adhesion through the melted thermoplastic material is accelerated.

However, there is an undesired effect in the above method that the thermoplastic material is rolled by the nip roll, whereby many gas permeable pores through the sheet material are unnecessarily plugged so that original gas permeability of the sheet material cannot be maintained. With such a method of the prior art, the gas permeability retention ratio is said to be at most about 65 %.

In order to overcome the above problem, various methods have been proposed to laminate a plurality of the gas permeable materials together into the integral form with keeping their gas permeability. For example, the following methods can be exemplified:
1) A fusible adhesive is disposed on a gas permeable material in the form of dots or lines, and then other gas permeable material is laminated on the gas permeable material;
2) A tape or film having thermoplasticity is disposed on a gas permeable material with a given separation, and then other gas permeable material is disposed on the gas permeable material so as to heat laminate them (see, for example, Japanese Patent Kokai Publication No. 64433/1992 and Japanese Patent Kokai Publication No. 249739/1987;
3) A thermoplastic synthetic resin is spread on a gas permeable material or a thermoplastic synthetic resin emulsion is applied to a gas permeable material, then other gas permeable material is placed on the gas permeable material, and both materials are heated to melt the synthetic resin so that the gas permeable materials are laminated together (see, for example, Japanese Patent Kokai Publication No. 179545/1992 and Japanese Patent Kokoku Publication No. 14889/1990);
4) Superposed gas permeable materials are partially heat-fused using an embossing roll (see, for example, Japanese Patent Kokai Publication No. 194912/1989);
5) A non-woven fabric comprising a conjugated fiber (namely, a composite fiber comprising a core/heat-fusible sheath structure) is superposed on a gas permeable material, and they are heat laminated with a minimum pressure applied by a felt calendering roll (see, for example, Japanese Patent Kokai Publication No. 122752/1987); and
6) The gap (a clearance) between heat laminating rolls, the lamination temperature and the roll rotating speed are adjusted to partially heat-fuse gas permeable materials so as to achieve a fused area ratio of 5 to 95 % (see, for example, Japanese Patent Kokai Publication No. 293008/1991).

In the methods of the above 1) to 4), since a surface of the gas permeable material is partially plugged, the gas permeability of the gas permeable material is decreased so that the gas permeability inherent in the material cannot be fully maintained. In addition, even when the felt calendering roll is used with the minimum pressure as in the process of 5), the gas permeability is decreased by at least 30 %.

Contrary to those methods, since the method of 6) adjusts the gap between the heat laminating rolls to control the heat-fused area in a range of 5 to 95 %, almost no decrease of the gas permeability (which is measured as a pressure drop increase) occurs. However, the adjustment of the gap is so sensitive that only about 0.2 mm change of the gap makes impossible to maintain the gas permeability. In addition, the sensitive adjustment of the gap is required whenever the material or the weight per unit of surface area (METSUKE) of the gas permeable material is changed. Further, a commercially available gas permeable material such as a non-woven fabric scatters in its thickness. It is, therefore, very difficult to stably apply a pressure with keeping a constant gap for the lamination. When a rubber roll is used as a press roll in order to accommodate such scattering of the thickness, there occurs a problem that the gap cannot be controlled due to thermal expansion of the rubber.
EP-A-480 724 discloses a reinforcement of airlaid nonwovens which is a cloth-like composite laminate comprising a wetlaid, nonwoven bicomponent fiber web layer and two nonwoven airlaid pulp web layers provided on opposite sides of the bicomponent layer. The layers of the laminate are bonded together by fusion bonding of fibers of the wetlaid layer to the fibers of the airlaid layers. The fusion is effected by heating the layered structure to soften the bicomponent fibers.

### Disclosure of the Invention

It is an object of the present invention to overcome the problems as described above, that is, the decrease of the gas permeability and the unstable production of the laminate in the methods of the prior art, and to provide a method of laminating gas permeable materials together with keeping their gas permeability which process is not affected by ambient factors such as the weight or thickness of the gas permeable material and which process is applicable for the convenient mass production of the laminate.

As a means to achieve the above object, the present invention provides a method of laminating at least two gas permeable sheet materials as defined in appended claim 1.

Particularly, according to the present invention, there is provided a method in which at least two adjacent gas permeable sheet materials such as a cloth or a non-woven fabric or a film material are laminated without degradation of the gas permeability of the sheet materials.

The heating means is, for example, a heating roll or a heating plate which heats said thermoplastic material to or above its melting point no pressure is applied to said sheet materials either positively or directly in the thickness direction of said sheet materials.

### Brief Description of the Drawing

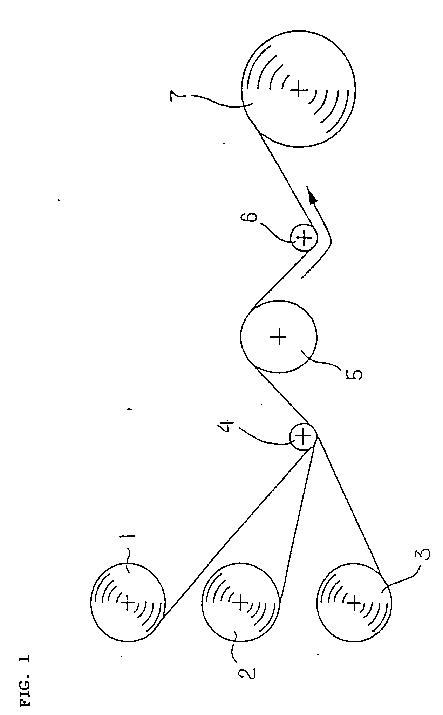

Fig. 1 schematically shows a lamination equipment which can be used for the production of a laminate by the method according to the present invention.

In Fig. 1, reference numbers 1, 2 and 3 each indicates an unwind roll, 4 does a feed roll, 5 does a heating roll, 6 does a guiding roll and 7 does a wind-up roll.

### Detailed Description of the Invention

In the present invention, "no pressure is applied immediately after heating" means that no pressure is applied when the thermoplastic material is in a melted condition and still weldable. Further, "without direct pressure application along the thickness direction of the sheet materials" means that no intentional pressure is directly applied along the thickness direction of the sheet materials by, for example, the nip roll. Thus, for example, when guiding rolls are used to transport the sheet materials resulting in that the sheet materials are not be aligned along a straight line, a pressure resulting from the non-alignment may have a component force which is along the thickness direction. Such transportation of the sheet materials is included in "without direct pressure application". In addition, spontaneous pressure application (or pressing) to a lower sheet material by a self-weight of one or more upper sheet material which is stacked on the lower sheet material is also included in "without direct pressure application".

In the present invention, the gas permeable sheet material means a sheet material having gas permeability (including moisture permeability and breathability) which is used for a fabric material and a sanitary material, a packaging material, various filter materials and a building material. For example, the gas permeable sheet material may be a non-woven fabric, a woven fabric, a knit, a web or a fibrous mat.

Further, in the present invention, the thermoplastic material is, for example, a polyolefin (such as a polyethylene, a polypropylene or a polystyrene), a polyester, an ethylene-vinyl acetate copolymer, a polyvinyl chloride and a polyvinylidene chloride. The material is not particularly limited to those materials provided that it has suitable thermoplasticity for an intended application.

The gas permeable sheet material has such a thermoplastic material as described above on at least a portion of at least its surface region. Thus, only the surface region of the gas permeable sheet material may be entirely made of the thermoplastic material. Alternatively, the gas permeable sheet material may be made of the thermoplastic material in its entirety, not in the surface region only.

The gas permeable sheet material which can be used in the method of the present invention is, for example, a woven fabric or a non-woven fabric which comprises a synthetic resin having thermoplasticity such as a polyolefin, a polyester, an ethylene-vinyl acetate copolymer, a polyvinyl chloride and a polyvinylidene chloride. In addition, a non-woven fabric or a web as its precursor comprising a conjugated fiber which has a core/sheath structure having a sheath made of the synthetic resin having thermoplasticity may be exemplified as the gas permeable sheet material. Another example is, a shaped material made of such a conjugated fiber. Further, a composite material of such a non-woven fabric can be used as the gas permeable sheet material.

Particularly, it is known that when the conjugated fibers having such a core/sheath structure are heat pressed to other gas permeable sheet material using a heating press or a lamination roll, the sheath portions having thermoplasticity are bonded at extreme small separations in line forms or dot forms so that a bonded sheet material which is less plugged is produced in comparison with a case in which the sheet material is bonded using an adhesive (see, for example, Japanese Patent Kokai Publication No. 83017/1987 and Japanese Patent Kokai Publication No. 122752/1987). Thus, the sheet comprising such a conjugated fiber is one of the most useful material in the present invention.

In the present invention, the thermoplastic material provides an adhesive function so that it can heat laminate with a gas permeable sheet material which does not have any thermoplasticity. Thus, it is sufficient that at least one of the two adjacent sheet materials which are to be laminated together has the thermoplasticity as described above. Although the adjacent sheet materials do not necessarily both comprise the thermoplastic material, they may do so.

The gas permeable sheet material which does not have the thermoplasticity may be, for example, a stretched porous film made of a polytetrafluoroethylene (hereinafter, referred to as "PTFE") (see Japanese Patent Kokoku Publication No. 18991/1976 and Japanese Patent Kokoku Publication No. 7967/1990), a PTFE skived tape (commercially available under trade name "Zitex" from Performance Plastics Co.), a woven- or non-woven fabric of a polyimide fiber, a non-woven fabric of a glass fiber and a sintered metal material having the gas permeability .The laminate to be prepared according to the present invention comprises a porous PTFE film gas permeable sheet material.

What is the most important in the present invention is the absence of a positive pressure application along the direction of the thickness of the gas permeable sheet materials as would result for example by the use of a roll when or immediately after the thermoplastic material of the gas permeable sheet material(s) has been heated to at least its melting point, which is different from the method of the prior art. That is, in the prior art, a pressure is applied positively to the sheet materials along their thickness direction so as to help them bond together using the nip roll when or immediately after the materials to be bonded are heated as described above. The present invention positively eliminates this pressure application step.

According to the present invention, by controlling guiding rolls which are required for unwinding from rolls and for winding-up to a roll disposed upstream and downstream of a superposing step of the gas permeable sheet materials to be laminated and also by controlling unwinding speeds of the gas permeable materials, only a very small tension of, for example, 30 g/cm to 170 g/cm applied to at least one gas permeable sheet material can allow heat lamination of the sheet materials when the sheet material having the thermoplastic material is contacted with a heating means such as a heating roll or a heating plate.

In an extreme embodiment, heat lamination even with only positioning the gas permeable sheet materials one on the other without any tension (namely, substantially no tension is applied to all of the sheet materials: 0 g/cm tension condition) can fully achieve the effect of the present invention.

However, it is not essential to the present invention that the tension is small. What is essential to the present invention is no positive and direct pressure application along the thickness direction of the gas permeable sheet materials during the thermoplastic material is in the melted condition. In the lamination method of the prior art, an excess pressure is applied so that the retention ratio of the gas permeability is not good, and therefore, by eliminating such an excess pressure application, the present invention is provided.

Thus, it is possible to further increase the tension within the tensile strength of the gas permeable sheet material, which allows productivity of the laminate to be increased.

The heating means heats the thermoplastic material of a surface region of at least one of the gas permeable sheet materials to its melting point or higher. In the present invention, the heating means may heat the thermoplastic material to a relatively higher temperature than its melting point. That is, when a tension is acted on a certain gas permeable sheet material, the upper limit of the heating temperature should be below the melting point of the material which constitutes the body of the gas permeable sheet material, which makes a possible temperature range for lamination operation broader so that processing limitation is decreased.

For example, in one preferred embodiment of the present invention, a non-woven fabric is used which is made of a conjugated fiber having a core/sheath structure of which sheath is made of a polyethylene and of which core is made of a polyester. In this embodiment, any temperature in a range from the melting point of the polyethylene to the melting point of the polyester, preferably 140 °C to 230 °C may be used for the lamination operation. In addition, satisfactory lamination is possible even when the heating period (thus, the line speed) is greatly changed. Especially, the line speed in a range of 1 to 10 m/min. achieves the better lamination. Thus, since the conditions for the lamination operation according to the present invention are so versatile, no processing condition requires to be changed even when the weight or the thickness of the non-woven fabric is changed, which is also one of the features of the present invention.

For the estimation of the present method, the retention ratio of the gas permeability is to be measured, which was measured according to the following procedures.

### [Pressure Drop Measurement]

A laminate of gas permeable sheet materials is cut out into a circle having a diameter of 47 mm, and the circle laminate is set on a holder having a permeation area of 12.6 cm², then a pressure drop was measured at an air speed of 5.3 cm/s.

### [Gas Permeability Retention Ratio]

The gas permeability retention ratio was measured according to the following equation:
Gas Permeability Retention Ratio = (Pressure Drop before Lamination/Pressure Drop after Lamination) X 100 (%) wherein Pressure Drop before Lamination is the sum of the pressure loss of each gas permeable sheet material to be laminated.

### Examples

### [Example 1]

A lamination equipment as schematically shown in Fig. 1 was used to laminate gas permeable sheet materials . according to the present invention. In the lamination equipment of Fig. 1, the gas permeable sheet materials A, B and C are unwound from unwind rolls 1, 2 and 3, respectively and heated with a heating roll 5 through a feed (guiding) roll 4 followed by being wound by a wind roll 7 through a guiding roll 6.

As clearly seen from Fig. 1, there is no roll which positively applies a pressure in the thickness direction of the sheet materials when and immediately after the sheet materials are heated. The amount of tension applied to each sheet material was adjusted by a break provided for each of the unwind rolls 1, 2 and 3. The line speed was adjusted with a wind-up speed of a winding unit.

In this Example, a spunbonded non-woven fabric (ELEVES T0703WDO, weight: 70 g/m², pressure drop: not larger than (9,81 Pa (1 mmAq), thickness:260 µm, commercially available from UNITIKA LTD.) of a conjugated fiber having a core/sheath structure of which sheath was made of a polyethylene and core was made of a polyester as the gas permeable sheet material "A" was unwound from the unwind roll at a line speed of 5 m/min under an applied tension of 170 g/cm. A PTFE (polytetrafluoroethylene) porous film (weight: 2 g/m², pressure drop: 490,5 Pa (50 mmAq), thickness 4 µm) as the gas permeable sheet material "B" was superposed on the material "A" under an applied tension of 20 g/cm. In addition, a double layer spunbonded non-woven fabric (ELEFIT E0303WTO, weight: 30 g/m², pressure drop : not larger than 9,81 Pa (1 mmAq), thickness :190 µm, commercially available from UNITIKA LTD.) of two conjugated fibers each having a core/sheath structure (one of which had a polyethylene sheath and a polyester core, and the other of which had a modified polyester sheath and a polyester core) as the gas permeable sheet material "C" was also unwound from the unwind roll at a line speed of 5 m/min under an applied tension of 40 g/cm so as to be superposed on the materials "A" and "B".

The PTFE porous film used in this Example was prepared according to a process disclosed in the specification of Japanese Patent Application No. 196663/1992 (corresponding to Japanese Patent Kokai Publication No. 202217/1993).

Concretely, PTFE fine powder (Polyflon Fine Powder F-104 commercially available from Daikin Industries Ltd.) was paste-extruded together with an extrusion aid and rolled to have a film having a thickness of 100 µm, which was then continuously thermally-treated in an oven at 339 °C. Then, the film was stretched by 200 times of an original area of the film (a stretched area factor) at an atmosphere temperature of 300 °C followed by heat-setting at 350 °C to have a porous film having a weight of 2 g/m², a pressure drop of 490,5 Pa(50 mmAq) and a thickness of 4 µm.

Superposed sheet materials "A", "B" and "C" were contacted with the heating roll heated to a temperature of 190 °C at a line speed of 5 m/min. to have a satisfactorily integrated laminate having a three layer structure which showed a pressure drop of 52 mmAq.

### [Example 2]

On each of both edges of a spunbonded non-woven fabric (ELEVES T1003WDO, weight: 100 g/m², pressure drop: not larger than 1 mmAq, thickness: 330 µm, commercially available from UNITIKA LTD.) of a conjugated fiber having a core/sheath structure of which sheath was made of a polyethylene and core was made of a polyester, a double adhesive tape having a width of 1 cm was placed. Then, the same PTFE porous film (size: 30 cm square) as in Example 1 (weight: 2 g/m², pressure drop: 490,5 Pa (50 mmAq), thickness: 4 µm) was placed on the non-woven fabric to bond them together at only each edge.

The superposed sheet materials were so placed on a heating plate having a size of 20 cm square that a PTFE film side was contacted with the plate and the heating plate was located in the center of the superposed sheet materials. Then, the heating plate was heated to a temperature of 230°C and the superposed gas permeable sheet materials were left for 5 minutes before the materials were removed from the plate. Then, the bonded portions with the double adhesive tapes were removed. A satisfactorily integrated laminate showing a pressure drop of 500,3 Pa (51 mmAq) was obtained even when no tension (tension of 0 g/cm) was acted during the production thereof.

### [Example 3]

Example 1 was repeated except that the sheet materials were contacted with the heating roll at 140 °C with a line speed of 1 m/min to produce a laminate. The materials were well integrally laminated and showed a pressure drop of 490,5 Pa (50 mmAq).

### [Example 4]

Example 1 was repeated except that a PTFE porous film (having a weight of 3 g/m², a pressure drop of 735,8 Pa (75 mmAq) and a thickness of 8 µm) as the material "B" was superposed, and the sheet material "A" was contacted with the heating roll at 230 °C with an applied tension of 30 g/cm and a line speed of 5 m/min. The materials were well integrally laminated and showed a pressure deep of 833,9 Pa (85 mmAq). In this Example, the gas permeable sheet material "B" was produced according to the same process for the production of the PTFE porous film as in Example 1 except that the stretching ratio based on the stretched area factor was 120 times.

### [Example 5]

The same equipment as shown in Fig. 1 was used except that two unwind rolls were provided.

A spunbonded non-woven fabric (ELEVES T0703WDO, weight: 70 g/m², pressure drop: not larger 9,81Pa (1 mmAq), thickness : 260 µm, commercially available from UNITIKA LTD.) of a conjugated fiber having a core/sheath structure of which sheath was made of a polyethylene and core was made of a polyester as the gas permeable sheet material "A" was unwound from the unwind roll at a line speed of 10 m/min and an applied tension of 90 g/cm. A PTFE (polytetrafluoroethylene) porous film (weight: 3 g/m², pressure drop: 735,8 Pa (75 mmAq), thickness: 8 µm) as the gas permeable sheet material "B", which was the same as in Example 4, was superposed on the material "A" at an applied tension of 20 g/cm, and contacted with the heating roll at 190°C to have a well integrated two layer laminate which showed a pressure drop of 765,2 Pa (78 mmAq).

### [Example 6]

Using the same equipment as in Example 1, a spunbonded non-woven fabric (ELEVES T1003WDO, weight: 100 g/m², pressure drop: not larger than 9,81 Pa (1 mmAq)_{,} thickness :330 µm, commercially available from UNITIKA LTD.) of a conjugated fiber having a core/sheath structure of which sheath was made of a polyethylene and core is made of a polyester as the gas permeable sheet material "A" was unwound from the unwind roll at a line speed of 5 m/min. under an applied tension of 90 g/cm. A PTFE (polytetrafluoroethylene) porous film (weight: 3 g/m², pressure drop:735,8 Pa (75 mmAq), thickness: 8 µm) as the gas permeable sheet material "B", which was the same as in Example 4, was overlapped with the material "A" under an applied tension of 20 g/cm. In addition, a multi layer composite fiber non-woven fabric (Melfit BT0303E, weight: 30 g/m², pressure drop: not larger than 9,81 Pa (1 mmAq), thickness: 80 µm, commercially available from UNICEL LTD.) of a polyester fiber constituting a surface to be bonded and a polypropylene constituting the other surface was also unwound as the gas permeable sheet material "C" from the unwind roll under an applied tension of 40 g/cm so as to overlap with the materials "A" and "B". The superposed gas permeable sheet materials "A", "B" and "C" were contacted with the heating roll at 170 °C to have a well integrated three layer laminate showing a pressure drop of ^{784,8 Pa (80 mmAq).}

### [Example 7]

Using the same equipment as in Example 1, a polyester (PET) spunbonded non-woven fabric (Marix 20707WTA, weight: 70 g/m², pressure drop: not larger than 9,81 Pa (1 mmAq), thickness: 240 µm, commercially available from UNITIKA LTD.) was unwound as the gas permeable sheet material "A" from the unwind roll at a line speed of 10 m/min. under an applied tension of 90 g/cm. A spunbonded non-woven fabric (ELEVES T0153WDO, weight: 15 g/m², pressure drop: not larger than 9,81 Pa (1 mmAq), thickness: 100 µm, commercially available from UNITIKA LTD.) of a conjugated fiber having a core/sheath structure (which had a polyethylene sheath and a polyester core) as the gas permeable sheet material "B" was overlapped with the material "A" (under an applied tension of 20 g/cm), and a PTFE porous film (having a weight of 2 g/cm², a pressure drop of 490,5 Pa 50 mmAq) and a thickness of 4 µm) was further overlapped thereon as the gas permeable sheet material "C" (under an applied tension of 30 g/cm). The superposed sheet materials "A", "B" and "C" were contacted with a heating roll at 160 °C to produce a well integrated laminate having a three layer structure which showed a pressure drop of 539,6 Pa (55 mmAq).

### [Comparative Example 1]

Example 1 was repeated except that the heating temperature was 190 °C and pressure application was carried out using a nip roll immediately after heating the materials so that an integral laminate having the three layer structure was obtained. Since the laminate showed a pressure drop exceeded 2943 Pa (300 mmAq), it was impossible to obtain a pressure drop value of the laminate.

### [Comparative Example 2]

The same line speed, the same tension, the same sheet materials all as in Example 1 were used and the sheet materials were contacted with the heating roll at a temperature of 100 °C which is below the melting point of the polyethylene. The polyethylene of the sheath was not integrated at a temperature below its melting point.

### [Comparative Examples 3 to 5]

Using the same sheet materials as in Example 1, the sheet materials were contacted with the heating roll at 135 °C to 145 °C with a line speed of 5 m/min. while the pressure application was carried out using a nip roll. When the heating temperature was 140 °C (in Comparative Example 4), a laminate having a three layer structure was produced of which pressure drop and lamination state were both relatively good. However, when the heating temperature was 135 °C (in Comparative Example 3), the sheet materials were not be integrated. To the contrary, when the heating temperature was 145 °C (in Comparative Example 5), the laminate showed an increased pressure drop and its gas permeability was insufficient.

Thus, it is seen that a temperature range which produces a good laminate is narrow when the nip roller is used, which causes a relatively severe constraint for the production of the laminate.

The results of the above Examples and the Comparative Examples are shown in "Table 1" below.

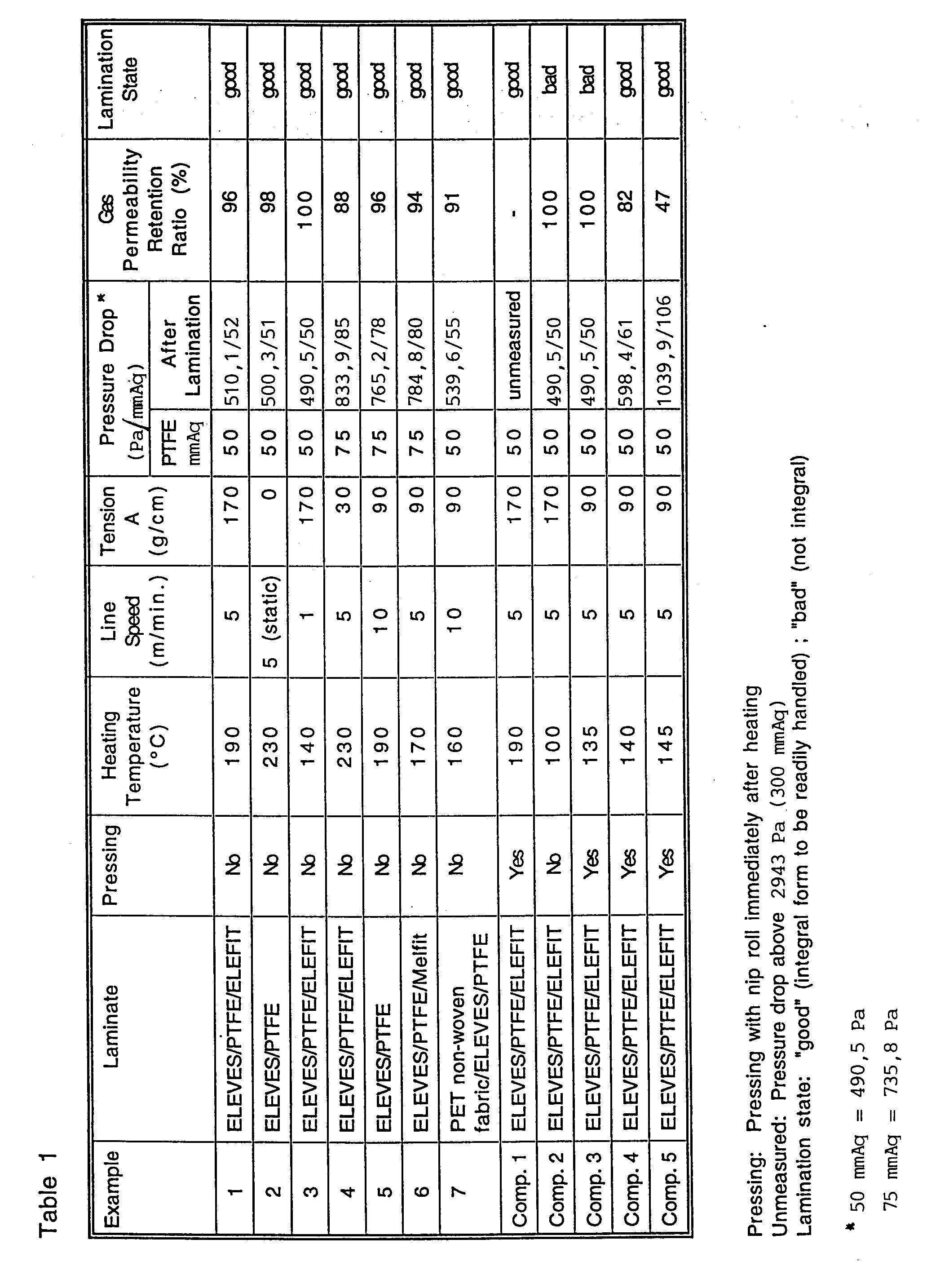

### Effect of the Invention

Eliminating the positive pressure application when or immediately after the thermoplastic material is melted, which has been employed in the prior methods, provides the laminate having a higher gas permeability retention ratio. Such a lamination method is in particular useful when increase of the pressure drop due to the lamination for the gas permeable material laminate causes a problem, especially when a filter material is laminated on a material which supports the filter material. That is, the gas permeability inherent in the filter material is maintained by laminating the filter material with the supporting material (which is, of course, gas permeable) according to the method of the present invention. In such a case, the supporting material provides a mechanical strength and a gas permeability retention ratio of the supporting material is not be of a problem. In addition, the present invention is, of course, useful when a plurality of the filter materials are laminated.

Further, in applications in which the gas permeability of the material is to be maintained other than the production of the filter medium, for example the production of a fabric for a sportswear which is gas permeable and/or waterproof, the gas permeability inherent in the material itself is kept by the method according to the present invention, so that the present process is highly effective.

## Claims

1. A method of laminating at least two gas permeable sheet materials, said sheet materials comprising a porous PTFE film, at least a portion of at least a surface region of at least one of those sheet materials which are devised to form a pair of adjacent sheets comprises a thermoplastic material, said sheet materials are superposed and are then laminated without direct pressure application to them in the thickness direction of said sheet materials on and after contact with a heating means which heats said thermoplastic material to or above its melting point so as to melt said thermoplastic material.

2. The method according to claim 1 wherein at least one of the gas-permeable sheet materials is a spunbonded non-woven fabric of a conjugated fiber having a core/sheath structure of which sheath is made of a polyethylene and of which core is made of a polyester or a composite of the fabric.

3. The method according to claim 2 wherein the heating temperature is in a range of 140 °C to 230 °C.

4. The method according to claim 3 wherein the line speed is in a range of 1 to 10 m/min.

## Patentansprüche

1. Verfahren zum Laminieren von zumindest zwei gasdurchlässigen Blattmaterialien, wobei die Blattmaterialien eine poröse PTFE-Folie umfassen, und zumindest ein Teil von zumindest einem Oberflächenbereich von zumindest einem dieser Blattmaterialien, die dafür vorgesehen sind, ein Paar von aneinandergrenzenden Blättern zu bilden, ein thermoplastisches Material umfasst, und wobei die Blattmaterialien übereinander angeordnet und anschließend laminiert werden ohne direkte Druckauferlegung in der Dickenrichtung dieser Blattmaterialien bei oder nach in Kontakt bringen mit einem Heizmittel, das das thermoplastische Material auf den Schmelzpunkt oder eine höhere Temperatur erwärmt, um das thermoplastische Material zu schmelzen.

2. Verfahren nach Anspruch 1, wobei zumindest eines der gasdurchlässigen Blattmaterialien ein Spinnvlies aus einer konjugierten Faser mit einer Kern/Hüllenstruktur ist, wobei die Hülle aus Polyethylen und der Kern aus Polyester besteht, oder eine Zusammensetzung dieses Gewebes.

3. Verfahren nach Anspruch 2, wobei die Wärmetemperatur im Bereich von 140°C bis 230°C liegt.

4. Verfahren nach Anspruch 3, wobei die Bandgeschwindigkeit im Bereich von 1 bis 10 m/min liegt.

## Revendications

1. Procédé de stratification d'au moins deux matériaux en feuille perméables aux gaz, lesdits matériaux en feuille comprenant un film de PTFE poreux, au moins une partie d'au moins une région de surface d'au moins un de ces matériaux en feuille qui sont divisés pour former une paire de feuilles adjacentes comprenant un matériau thermoplastique, lesdits matériaux en feuille étant superposés et ensuite étant stratifiés sans qu'on leur applique une pression directe en direction de l'épaisseur desdits matériaux en feuille pendant et après le contact avec un moyen chauffant qui chauffe ledit matériau thermoplastique à son point de fusion ou au-dessus de manière à fondre ledit matériau thermoplastique.

2. Procédé selon la revendication 1, caractérisé en ce qu'au moins un des matériaux en feuille perméables aux gaz est un tissu non tissé filé-lié constitué de fibres à deux composants ayant une structure âme/gaine dont la gaine est constituée d'un polyéthylène et dont l'âme est constituée d'un polyester ou est un composite du tissu.

3. Procédé selon la revendication 2, caractérisé en ce que la température de chauffage est dans la plage de 140°C à 230°C.

4. Procédé selon la revendication 3, caractérisé en ce que la vitesse linéaire est dans la plage de 1 à 10 m/min.
